# EUROPEAN PATENT SPECIFICATION

(11) **EP 2 600 156 B1**
(45) Date of publication and mention of the grant of the patent: **20.04.2022**
(21) Application number: 11811974.2
(22) Date of filing: 13.06.2011
(51) Int. Cl.: G01N 35/02, B01L 7/00, B01L 7/02, G01N 35/04, G01N 35/00

(54) **NUCLEIC ACID ANALYSIS DEVICE**
NUKLEINSÄUREANALYSEVORRICHTUNG
DISPOSITIF D'ANALYSE D'ACIDES NUCLÉIQUES

(30) Priority: 28.07.2010 JP 2010168770
(43) Date of publication of application: 05.06.2013
(73) Proprietor: Hitachi High-Tech Corporation, Minato-ku Tokyo 105-6409 (JP)
(72) Inventor: ISHIZAWA, Masato, Hitachinaka-shi Ibaraki 312-8504 (JP); SHOJI, Yoshiyuki, Hitachinaka-shi Ibaraki 312-8504 (JP)
(74) Representative: Mewburn Ellis LLP
(86) International application number: PCT/JP2011/003324
(87) International publication number: WO 2012/014367

(56) References cited:
- EP-A1- 2 095 877
- EP-A1- 2 306 204
- JP-A- 8 320 274
- JP-A- 2002 505 089
- JP-A- 2009 077 639
- JP-A- 2009 077 639
- JP-A- 2010 002 247
- US-A1- 2009 117 620
- Molecular Devices Coorporation ' S: "LMax (TM) II 384 and LMax II User's Manual", , 1 January 2004 (2004-01-01), XP055806533, Retrieved from the Internet: URL:http://mdc.custhelp.com/euf/assets/con tent/User%20Manual%20-%20LMax%20II.pdf [retrieved on 2021-05-21]

## Description

### Technical Field

The present invention is concerned with analysis techniques and analysis devices for qualitatively and quantitatively analyzing the target nucleic acids contained in biological samples such as blood and urine, and relates to a technique that requires temperature changes in reaction liquid amplification and detection processes, a technique that does not require temperature changes in reaction liquid amplification and detection processes, and to nucleic acid analysis devices related thereto.

### Background Art

Nucleic acid amplification techniques such as polymerase chain reaction (hereinafter, "PCR") have been used for amplification and quantification of nucleic acids contained in samples originating in living organisms.

For nucleic acid amplification, PCR requires periodically changing the sample temperature in typically about two to three temperature regions.

In order to realize such a periodic temperature control method, Patent Documents (1) to (3) below disclose devices that include regions maintained at different set temperatures, and a disc-shaped sample holder, and in which the sample temperature is periodically changed by the rotation of the disc.

However, in PCR, the temperature and time required for the annealing reaction of binding primers to their complementary sequences in the detection target base sequences differ depending on the sequences. The temperature and time required for the extension reaction also differ depending on the type of the enzyme added.

Thus, if the detection target base sequences, specifically a plurality of reaction liquids of different protocols were to be simultaneously processed, the nucleic acid amplification device having the settings for the temperature and time specified by the protocol would be needed in the same number as the number of the protocols to be simultaneously processed.

A device is known that includes a plate for holding a plurality of samples, and that evenly controls temperature over the whole plate. However, PCR involves a temperature cycle consisting of denature reaction, annealing reaction, and extension reaction, and an analysis is finished after repeating a certain number of cycles . In the foregoing device, an analysis of a new sample cannot be started once an analysis of a sample is started and until the analysis ends, even when the protocols are the same. This is problematic, because obtaining an analysis result for the new sample takes a long time. The inability to add a new sample after a sample analysis is started is not just a problem of the PCR nucleic acid amplification technique, but commonly exists in general in genetic testing techniques, including constant-temperature amplification techniques such as LAMP and NASBA.

Other nucleic acid analysis devices are disclosed in Patent Documents (4) to (6) .

### Citation List

### Patent Documents

Patent Document 1: JP-A-2008-185389
Patent Document 2: JP-A-09-224644
Patent Document 3: JP-A-2006-115742
Patent Document 4: JP-A-2010-002247
Patent Document 5: JP-A-2009-077639
Patent Document 6: EP-A-2095877

### Summary of the Invention

### Problems that the Invention is to Solve

It is an object of the present invention to provide a device that can process a plurality of nucleic acid detection protocols in parallel, and in which any nucleic acid detection protocol of a new sample can be additively performed even when other nucleic acid detection protocols are being run.

### Means for Solving the Problems

The present invention is as set out in the claims.

### Advantage of the Invention

With the present invention, a device can be provided that can process a plurality of protocols in parallel for a single or more than one specimen vessels sorted by protocol, and in which any nucleic acid detection protocol of a new sample can be additively performed even when other nucleic acid detection protocols are being run.

### Brief Description of the Drawings

[Fig. 1] Fig. 1 is a diagram showing an overall configuration of a nucleic acid analysis device of an embodiment.
[Fig. 2] Fig. 2 is a diagram showing an inner layout of the nucleic acid analysis device of the embodiment.
[Fig. 3] Fig. 3 is a diagram showing how an extraction device is joined in the embodiment.

### Mode for Carrying Out the Invention

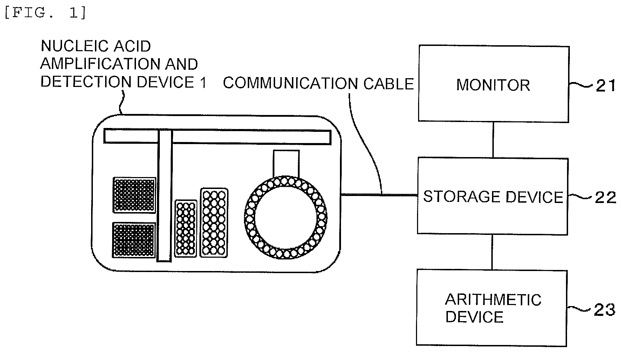

Fig. 1 is a diagram showing an overall configuration of a nucleic acid analysis device (nucleic acid amplification and detection device) on an embodiment of the present invention. A nucleic acid analysis device 1 is connected to a monitor 21, a storage device 22, and an arithmetic device 23 via a communication cable. The monitor 21 serves as an operational unit for controlling the nucleic acid analysis device 1.

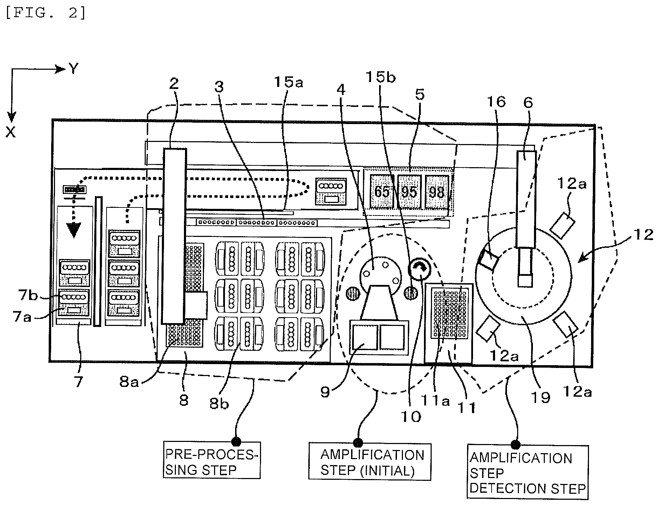

Fig. 2 is a diagram (plan view) showing an inner layout of the nucleic acid analysis device 1. With reference to Fig. 2, the constituting elements of the major mechanisms are described below. Specimen vessels 7b are accommodated in a specimen vessel rack 7a, and each specimen vessel rack 7a is installed in a specimen vessel installation mechanism 7. The specimen vessel installation mechanism 7 is provided for the loading and exporting of the specimen vessel rack 7a. In the figure, the movement of the specimen vessel rack 7a is indicated by a broken line arrow.

A dispensing unit 2 is provided for the suction and ejection of liquid, and is capable of independently moving in a plane by being joined to a robot arm X axis and a robot arm Y axis. Similarly, a gripper unit 6 holds and transports a reaction vessel 11a, and is capable of independently moving in a plane by being joined to a robot arm X axis and a robot arm Y axis. Here, though the dispensing unit 2 and the gripper unit 6 are described as being movable in a plane, these may be configured to move also in a vertical direction. Note that the dispensing unit 2 and the gripper unit 6 share the robot arm Y axis, and have different movable ranges (plane movable regions in the Y axis direction).

Dispensing tips 8a and reagent vessels 8b are stored in separate racks, and installed in a disposable installation mechanism 8. The dispensing tip 8a after use in a dispensing step is discarded into a dispensing tip disposal hole 15a, and is stored in a waste box (not illustrated) . The reaction vessel 11a is a vessel to which a sample and a reagent are ejected, and is installed in a reaction vessel installation mechanism 11 by being stored in a rack.

A thermostat bath 5 is set to a specific temperature, and is provided for a heat denature step. More than one thermostat baths 5 are provided (three in the example of Fig. 2) to accommodate a plurality of assay protocols. The adjusting site of the reaction liquid as a mixture of a specimen and a reagent is a movable reaction vessel transport mechanism 3, which serves as a bridge between the steps performed with the dispensing unit 2 and the gripper unit 6. A photometric means 12 is the site where amplification and detection of nucleic acid take place, and is configured from a thermostat bath 19 maintained at a specific constant temperature, and a plurality of detectors 12a disposed around the thermostat bath 19. The import and export of the reaction vessel 11a in and out of the photometric means 12 are performed by opening and closing a gate 16. Specifically, the reaction vessel 11a is imported and exported with the gate 16 open. The gate 16 is closed in other times. The reaction vessel 11a after the detection step is discarded into a reaction vessel disposal hole 15b with the gripper unit 6, and stored in the waste box.

In representative operation steps of the nucleic acid analysis device 1, the reaction vessel 11a is installed in the reaction vessel transport mechanism 3 with the gripper unit 6. With the dispensing tip 8a attached to the dispensing unit 2, a sample is sucked from the specimen vessel 7b in the specimen vessel rack 7a, and ejected into the reaction vessel 11a installed in the reaction vessel transport mechanism 3.

Here, the reaction vessel 11a installed in the reaction vessel transport mechanism 3 has been transferred to the movable range of the dispensing unit 2. By using the same procedure, the reagent is sucked from the reagent vessel 8b, and ejected into the reaction vessel 11a. The dispensing tip 8a after use in the sample and reagent suction and ejection step is discarded in the waste box to prevent contamination. After the sample and reagent ejection, the reaction vessel 11a is sealed by being capped with a sealing mechanism 4, and agitated with an agitation mechanism 10. The reaction vessel 11a is then imported to the thermostat bath 19 of the photometric means 12 with the gripper unit 6, and detection is performed with the detectors 12a.

After the detection step of a specific time period, the reaction vessel 11a is stored in the waste box with the gripper unit 6. Because the photometry is performed in a dark-room state shielded from ambient light, the import and export of the reaction vessel 11a in and out of the thermostat bath 19 of the photometric means 12 are performed by opening and closing the gate 16. Specifically, by applying the device layout of the present embodiment, the nucleic acid amplification and detection step can easily be automated.

With reference to Fig. 2, the following describes the characteristic sites in the layout of the present invention. First, the present embodiment realizes (1) continuous loading of a specimen. In order to realize this function, the specimen vessel 7b accommodating a specimen is accommodated in the specimen vessel rack 7a, and each specimen vessel rack 7a is installed in the specimen vessel installation mechanism 7, whereby a new loading operation of the specimen vessel rack 7a, and the export and collection operation of the specimen vessel rack 7a after dispensing can easily be performed by accessing the front side of the device (the lower side in the figure).

With regard to (2) the reagent continuous loading function, the reagent vessels 8b are stored in a rack, and installed in the disposable installation mechanism 8, as in (1). The disposable installation mechanism 8 can be drawn out, and can thus be easily installed and collected by accessing the front side of the device.

With regard to (3) the disposable (dispensing tip 8a, reaction vessel 11a) continuous loading function, the dispensing tips 8a are stored in a rack, and installed in the disposable installation mechanism 8. The reaction vessels 11a are stored in a rack, and installed in the reaction vessel installation mechanism 11. As above, the disposable installation mechanism 8 and reaction vessel installation mechanism 11 can be drawn out, and can thus be easily installed and collected by accessing the front side of the device. In the present embodiment, the reagent vessels 8b and the dispensing tips 8a are installed in the same disposable installation mechanism 8. However, these may be independently installed in different mechanisms. Whether to install these members in the same or different mechanisms should be decided according to the scale of the device to which the present invention is applied, and does not constitute the requirement of the present embodiment.

With regard to (4) the continuous loading into the photometric means 12, this function can be realized by the following configuration. The thermostat bath 19, a constituting element of the photometric means 12, is rotatably provided, and has a specific number of reaction vessel 11a-accommodating holes (not illustrated). The import and export of the reaction vessel 11a into the photometric means 12 are controlled by opening and closing the gate 16. The gripper unit 6 can access the reaction vessel 11a while the gate 16 is open to realize the continuous loading and exporting operation of the reaction vessel 11a. Note that the driving of the thermostat bath 19 is not limited to rotational, and may be linear motion driving.

With regard to (5) the parallel processing of a plurality of nucleic acid detection protocols, the function mainly requires in general that the applied temperature is different in the heat denature step performed before (4) the photometric means loading, and can be realized by the following configuration. The thermostat baths 5 are set to specific temperatures, and can be independently controlled at constant temperatures. Each thermostat bath has a specific number of reaction vessel 11a-accommodating holes, and thus a plurality of nucleic acid detection protocols can be processed in parallel.

By applying the present embodiment realizing the foregoing (1) to (5), a device can easily be provided that can process a plurality of nucleic acid detection protocols in parallel, and in which any nucleic acid detection protocol of a new sample can be additively performed even when other nucleic acid detection protocols are being run.

In connection with the movable reaction vessel transport mechanism 3 defined in the present embodiment, the main added values of applying the present embodiment are described below. As shown in Fig. 2, the steps performed at the sites of the device layout of the present invention are classified into a pre-processing step, an amplification step, and a detection step. In the present embodiment, these step areas are transversely linked by the movable reaction vessel transport mechanism 3. The realization of the movable reaction vessel transport mechanism 3 makes it possible to limit the movable ranges of the dispensing unit 2 and the gripper unit 6, and to simplify the operations and thus easily realize a high throughput. Further, the heaviness of the mechanism sites for the robot arm X axis and the robot arm Y axis can be reduced to promote reductions in the device space and weight. Further, the dispensing unit 2 and the gripper unit 6 do not create any intertraffic in the device, and as a result contamination can be greatly suppressed. This greatly contributes to improving device reliability.

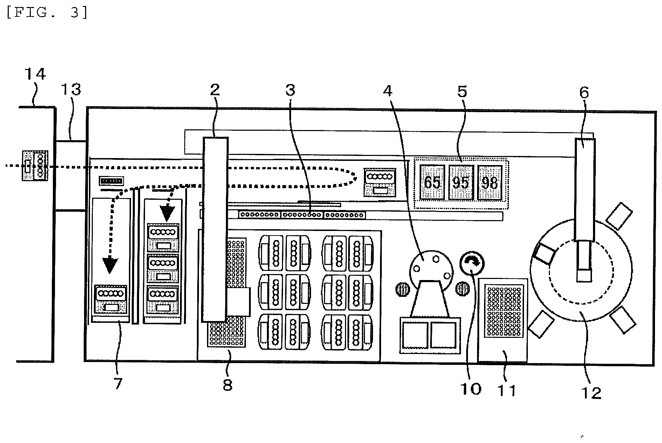

A prospective extended function is described below with reference to Fig. 3. As represented in Fig. 3 that considers joining the device to a nucleic acid extraction device 14, the steps from the extraction step to the detection step can be fully automated when the nucleic acid analysis device 1 has an extended function provided with a joint device 13 that functions to enable the transport of the specimen vessel rack 7a to the specimen vessel installation mechanism 7 between the devices.

As can be easily understood from the foregoing descriptions, it is possible with the device layout of the present invention to realize a device that can process a plurality of nucleic acid detection protocols in parallel, and in which a nucleic acid detection protocol of a new sample can be continuously and additively loaded even when other nucleic acid detection protocols are being run. It is therefore possible to easily provide the nucleic acid analysis device 1 having very high function expandability. It is also possible to provide a device that can process a plurality of protocols in parallel for a single or more than one specimen vessels sorted by protocol, and in which any nucleic acid detection protocol of a new sample can be additively performed even when other nucleic acid detection protocols are being run.

### Description of Reference numerals and Signs

- 1: Nucleic acid analysis device
- 2: Dispensing unit
- 3: Reaction vessel transport mechanism
- 4: Sealing mechanism
- 5, 19: Thermostat bath
- 6: Gripper unit
- 7: Specimen vessel installation mechanism
- 7a: Specimen vessel rack
- 8: Disposable installation mechanism
- 8a: Dispensing tip
- 8b: Reagent vessel
- 9: Sealing cap
- 10: Agitation mechanism
- 11: Reaction vessel installation mechanism
- 11a: Reaction vessel
- 12: Photometric means
- 12a: Detector
- 13: Joint device
- 14: Extraction device
- 15a: Dispensing tip disposal hole
- 15b: Reaction vessel disposal hole
- 16: Gate

## Claims

1. A nucleic acid analysis device [1] comprising:
a dispensing unit [2] attached to a dispensing tip [8a] and movable in three axis directions orthogonal to each other;
a reaction vessel gripping mechanism [6] that grips the reaction vessel and is movable in three axis directions orthogonal to each other;
wherein the nucleic acid analysis device further comprises:
a temperature adjusting mechanism [19] that is capable of rotational or linear motion and has a vessel-accommodating hole for accommodating a reaction vessel [11a], and is capable of adjusting the temperature for the vessel-accommodating hole;
a detector [12a] that detects fluorescence from the reaction vessel accommodated in the temperature adjusting mechanism;
a gate [16] provided at a portion where the vessel is loaded into the vessel-accommodating hole;
wherein the reaction vessel gripping mechanism loads the reaction vessel into the vessel-accommodating hole and the gate is configured to be open during loading,
**characterized by**
a reaction vessel transport mechanism [3] that reciprocally moves across the accessible region by the dispensing unit and the accessible region by the reaction vessel gripping mechanism on the device plane with the reaction vessel installed in the reaction vessel transport mechanism,
wherein the dispensing unit and the reaction vessel gripping mechanism have different accessible regions on a plane of the device.

2. The nucleic acid analysis device of claim 1,
wherein the temperature adjusting mechanism has a plurality of vessel-accommodating holes, and is capable of adjusting different temperatures for the vessel-accommodating holes.

3. The nucleic acid analysis device of claim 1, wherein the open/close gate is provided in a chassis that keeps the vessel in a dark-room state.

4. The nucleic acid analysis device of claim 1, further comprising a joint device [13] provided in a preceding stage of the device and joined to a nucleic acid extraction mechanism [14] .

5. The nucleic acid analysis device of claim 1,
wherein the dispensing unit loads a sample and a reagent into the reaction vessel accommodated in the reaction vessel transport mechanism, and
wherein the device includes a sealing mechanism [4] that seals the reaction vessel after the loading, and an agitation mechanism [10] that agitates the reaction vessel after the sealing.

6. The nucleic acid analysis device of claim 1, wherein the reaction vessel transport mechanism, the sealing mechanism, the agitation mechanism, and the temperature adjusting mechanism are provided in this order.

7. The nucleic acid analysis device of claim 1, further comprising an installation mechanism by which a specimen vessel rack [7a] capable of accommodating a specimen-containing vessel, and a reagent vessel rack capable of accommodating a reagent-containing vessel [8b] are moved in and out of the device at different locations on a front face of the device.

8. The nucleic acid analysis device of claim 1, further comprising an installation mechanism by which a reaction vessel rack capable of accommodating the reaction vessel, and a dispensing tip rack capable of accommodating a dispensing tip are moved in and out of the device at different locations on a front face of the device.

9. The nucleic acid analysis device of claim 1, further comprising an installation mechanism by which a specimen vessel rack capable of accommodating a specimen-containing vessel, a reagent vessel rack capable of accommodating a reagent-containing vessel, a reaction vessel rack capable of accommodating the reaction vessel, and a dispensing tip rack capable of accommodating a dispensing tip are moved in and out of the device at different locations on a front face of the device.

## Patentansprüche

1. Nucleinsäureanalysevorrichtung [1], die Folgendes umfasst:
eine Abgabeeinheit [2], die mit einer Abgabespitze [8a] verbunden ist und in drei Achsenrichtungen, die normal aufeinander stehen, bewegbar ist;
einen Reaktionsgefäßgreifmechanismus [6], der das Reaktionsgefäß greift und in drei Achsenrichtungen, die normal aufeinander stehen, bewegbar ist;
wobei die Nucleinsäureanalysevorrichtung ferner Folgendes umfasst:
einen Temperatureinstellmechanismus [19], der zu einer Rotations- oder Linearbewegung in der Lage ist und ein Gefäßaufnahmeloch aufweist, um ein Reaktionsgefäß [11a] aufzunehmen und der in der Lage ist, die Temperatur für das Gefäßaufnahmeloch einzustellen;
einen Detektor [12a], der von dem in dem Temperatureinstellmechanismus aufgenommenen Reaktionsgefäß ausgehende Fluoreszenz detektiert;
einen Verschluss [16], der an einem Abschnitt bereitgestellt ist, wo das Gefäß in das Gefäßaufnahmeloch geladen wird;
wobei der Reaktionsgefäßgreifmechanismus das Reaktionsgefäß in das Gefäßaufnahmeloch lädt und der Verschluss ausgelegt ist, um während des Beladens offen zu sein,
**gekennzeichnet durch**
einen Reaktionsgefäßtransportmechanismus [3], der sich entlang der für die Abgabeeinheit zugänglichen Region und der für den Reaktionsgefäßgreifmechanismus zugänglichen Region auf der Vorrichtungsebene hin- und herbewegt, wobei das Reaktionsgefäß in dem Reaktionsgefäßtransportmechanismus eingefügt ist,
wobei die Abgabeeinheit und der Reaktionsgefäßgreifmechanismus unterschiedliche zugängliche Regionen auf einer Ebene der Vorrichtung aufweisen.

2. Nucleinsäureanalysevorrichtung nach Anspruch 1,
wobei der Temperatureinstellmechanismus eine Vielzahl von Gefäßaufnahmelöchern aufweist und in der Lage ist, für die Gefäßaufnahmelöcher unterschiedliche Temperaturen einzustellen.

3. Nucleinsäureanalysevorrichtung nach Anspruch 1, wobei der offene/geschlossene Verschluss in einem Gehäuse bereitgestellt ist, das das Gefäß in einem Dunkelkammerzustand hält.

4. Nucleinsäureanalysevorrichtung nach Anspruch 1, die ferner eine zusammengefügte Vorrichtung [13] umfasst, die in einer vorhergehenden Stufe der Vorrichtung bereitgestellt ist und mit einem Nucleinsäureextraktionsmechanismus [14] verbunden ist.

5. Nucleinsäureanalysevorrichtung nach Anspruch 1,
wobei die Abgabeeinheit eine Probe und ein Reagens in das Reaktionsgefäß lädt, das in dem Reaktionsgefäßtransportmechanismus aufgenommen ist, und
wobei die Vorrichtung einen Abdichtmechanismus [4], der das Reaktionsgefäß nach dem Beladen abdichtet, und einen Schüttelmechanismus [10] umfasst, der das Reaktionsgefäß nach dem Abdichten schüttelt.

6. Nucleinsäureanalysevorrichtung nach Anspruch 1, wobei der Reaktionsgefäßtransportmechanismus, der Abdichtmechanismus, der Schüttelmechanismus und der Temperatureinstellmechanismus in dieser Reihenfolge bereitgestellt sind.

7. Nucleinsäureanalysevorrichtung nach Anspruch 1, die ferner einen Einfügemechanismus umfasst, durch den ein Probegefäßgestell [7a], das in der Lage ist, ein eine Probe enthaltendes Gefäß aufzunehmen, und ein Reagensgefäßgestell, das in der Lage ist, ein ein Reagens enthaltendes Gefäß [8b] aufzunehmen, an verschiedenen Stellen einer Vorderseite der Vorrichtung in die Vorrichtung hinein und aus dieser heraus bewegt werden.

8. Nucleinsäureanalysevorrichtung nach Anspruch 1, die ferner einen Einfügemechanismus umfasst, durch den ein Reaktionsgefäßgestell, das in der Lage ist, das Reaktionsgefäß aufzunehmen, und ein Abgabespitzengestell, das in der Lage ist, eine Abgabespitze aufzunehmen, an verschiedenen Stellen einer Vorderseite der Vorrichtung in die Vorrichtung hinein und aus dieser heraus bewegt werden.

9. Nucleinsäureanalysevorrichtung nach Anspruch 1, die ferner einen Einfügemechanismus umfasst, durch den ein Probegefäßgestell, das in der Lage ist, ein eine Probe enthaltendes Gefäß aufzunehmen, ein Reagensgefäßgestell, das in der Lage ist, ein ein Reagens enthaltendes Gefäß aufzunehmen, ein Reaktionsgefäßgestell, das in der Lage ist, das Reaktionsgefäß aufzunehmen, und ein Abgabespitzengestell, das in der Lage ist, eine Abgabespitze aufzunehmen, an verschiedenen Stellen einer Vorderseite der Vorrichtung in die Vorrichtung hinein und aus dieser heraus bewegt werden.

## Revendications

1. Dispositif d'analyse d'acide nucléique (1) comprenant :
une unité de distribution (2) attachée à une pointe de distribution (8a) et mobile dans trois directions axiales orthogonales les unes aux autres ;
un mécanisme de préhension de récipient de réaction (6) qui saisit le récipient de réaction et est mobile dans trois directions axiales orthogonales les unes aux autres ;
dans lequel le dispositif d'analyse d'acide nucléique comprend en outre :
un mécanisme d'ajustement de température (19) qui est capable d'un mouvement rotationnel ou linéaire et a un trou de logement de récipient pour loger un récipient de réaction (11a), et est capable d'ajuster la température pour le trou de logement de récipient ;
un détecteur (12a) qui détecte une fluorescence provenant du récipient de réaction logé dans le mécanisme d'ajustement de température ;
une porte (16) prévue au niveau d'une partie où le récipient est chargé dans le trou de logement de récipient ;
dans lequel le mécanisme de préhension de récipient de réaction charge le récipient de réaction dans le trou de logement de récipient et la porte est configurée pour être ouverte pendant le chargement,
**caractérisé par**
un mécanisme de transport de récipient de réaction (3) qui se déplace en va-et-vient à travers la région accessible par l'unité de distribution et la région accessible par le mécanisme de préhension de récipient de réaction sur le plan de dispositif avec le récipient de réaction installé dans le mécanisme de transport de récipient de réaction,
dans lequel l'unité de distribution et le mécanisme de préhension de récipient de réaction ont des régions accessibles différentes sur un plan du dispositif.

2. Dispositif d'analyse d'acide nucléique selon la revendication 1, dans lequel le mécanisme d'ajustement de température a une pluralité de trous de logement de récipient, et est capable d'ajuster différentes températures pour les trous de logement de récipient.

3. Dispositif d'analyse d'acide nucléique selon la revendication 1, dans lequel la porte d'ouverture/fermeture est prévue dans un châssis qui maintient le récipient dans un état de type chambre noire.

4. Dispositif d'analyse d'acide nucléique selon la revendication 1, comprenant en outre un dispositif de raccordement (13) prévu dans un étage précédent du dispositif et raccordé à un mécanisme d'extraction d'acide nucléique (14) .

5. Dispositif d'analyse d'acide nucléique selon la revendication 1,
dans lequel l'unité de distribution charge un échantillon et un réactif dans le récipient de réaction logé dans le mécanisme de transport de récipient de réaction, et
dans lequel le dispositif comprend un mécanisme d'étanchéité (4) qui ferme de manière étanche le récipient de réaction après le chargement, et un mécanisme d'agitation (10) qui agite le récipient de réaction après la fermeture étanche.

6. Dispositif d'analyse d'acide nucléique selon la revendication 1, dans lequel le mécanisme de transport de récipient de réaction, le mécanisme d'étanchéité, le mécanisme d'agitation, et le mécanisme d'ajustement de température sont disposés dans cet ordre.

7. Dispositif d'analyse d'acide nucléique selon la revendication 1, comprenant en outre un mécanisme d'installation à l'aide duquel un râtelier de récipient d'échantillon (7a) capable de loger un récipient contenant un échantillon, et un râtelier de récipient de réactif capable de loger un récipient contenant un réactif (8b) sont déplacés à l'intérieur et à l'extérieur du dispositif à différents emplacements sur une face avant du dispositif.

8. Dispositif d'analyse d'acide nucléique selon la revendication 1, comprenant en outre un mécanisme d'installation à l'aide duquel un râtelier de récipient de réaction capable de loger le récipient de réaction, et un râtelier de pointe de distribution capable de loger une pointe de distribution sont déplacés à l'intérieur et à l'extérieur du dispositif à différents emplacements sur une face avant du dispositif.

9. Dispositif d'analyse d'acide nucléique selon la revendication 1, comprenant en outre un mécanisme d'installation à l'aide duquel un râtelier de récipient d'échantillon capable de loger un récipient contenant un échantillon, un râtelier de récipient de réactif capable de loger un récipient contenant un réactif, un râtelier de récipient de réaction capable de loger le récipient de réaction, et un râtelier de pointe de distribution capable de loger une pointe de distribution sont déplacés à l'intérieur et à l'extérieur du dispositif à différents emplacements sur une face avant du dispositif.
